# EUROPEAN PATENT APPLICATION

(11) **EP 3 318 836 A1**
(43) Date of publication of application: **09.05.2018**
(21) Application number: 17200698.3
(22) Date of filing: 08.11.2017
(51) Int. Cl.: G01B 11/02, G01B 9/04

(54) **DIGITAL MICROSCOPE IMAGING SYSTEM AND METHOD**

(30) Priority: 08.11.2016 GB 201618841
(71) Applicant: Ash Technologies Limited, County Kildare (IE)
(72) Inventor: RYAN, Louis, Naas, Co. Kildare (IE)
(74) Representative: Lucey, Michael

(57) **Abstract**

The invention provides a digital imaging method and system comprising a camera, a lens and a screen to view an object characterised in that the system comprises a module to generate and/or modify a digital graticule on said screen to verify if the object is within or outside a dimensional tolerance. The graticule can be generated/drawn in the system referencing a known good measurement/object, eliminating the problems of lens distortion, camera zoom/focus error and calibration errors.

## Description

### Field

The invention relates to a digital microscope imaging system and method.

### Background

Digital microscope imaging systems are well known art in the art. Digital microscopes can be used in the measurement, verification or validation in a quality assurance process across many industries.

An integrated full HD (1080p) digital microscope and measurement system is known in the art. Such a microscope can provide a custom platform that incorporates a highly configurable and upgradeable set of inspection and measurement applications such as focus stacking, 2D measurement, side by side and overlay image comparison.

In a typical example an image processing and control engine can deliver full HD live video image quality at 60 frames per second enabling it to be utilised as a solution in a broad range of quality control, testing, rework, assembly, inspection and documentation tasks. A Graphical User Interface can be a mouse controlled Interface delivering intuitive and efficient operation and control of a full application suite. Camera control functions (auto and manual focus, exposure, gain, brightness, white balance) can be provided.

Current digital microscopes suffer from a number of problems including: Lens distortion errors; Calibration Errors; or camera zoom and focus errors.

A number of prior art solutions exist, for example a system by Optilia Instruments AB (http://www.optiliaindustrial.eu/products/product/31/331) discloses a system where graticule images are saved on a SD-card in PNG format and automatically recognised by a HD-CAP for superimposing on live video of a HD inspection camera. The overlay function uses Alpha blending image element on the top of the video stream and the overlay Image Format: PNG. PNG contains transparency/ alpha-blending which leads to further inaccuracy. The graticule is created external to the unit and requires external PC with dedicated software, and suffers from lens distortion errors.

DE10226275 (Leica Microsystems) discloses a similar system to Optilia which requires an external PC to do the computation and overlay. It is used with traditional microscope (analogue) with capture camera and overlaying graticule on PC which has a large processing power overhead. This system does not effectively deal with the lens distortion problem

Other patent publication in the art include US2010/110378 (Cheng); US6,366,349 (Houde-Walter); WO2005/015285 (Elop Electrooptics) and US 2005/268521 (Cox et al), all of which suffer from the lens distortion error problem.

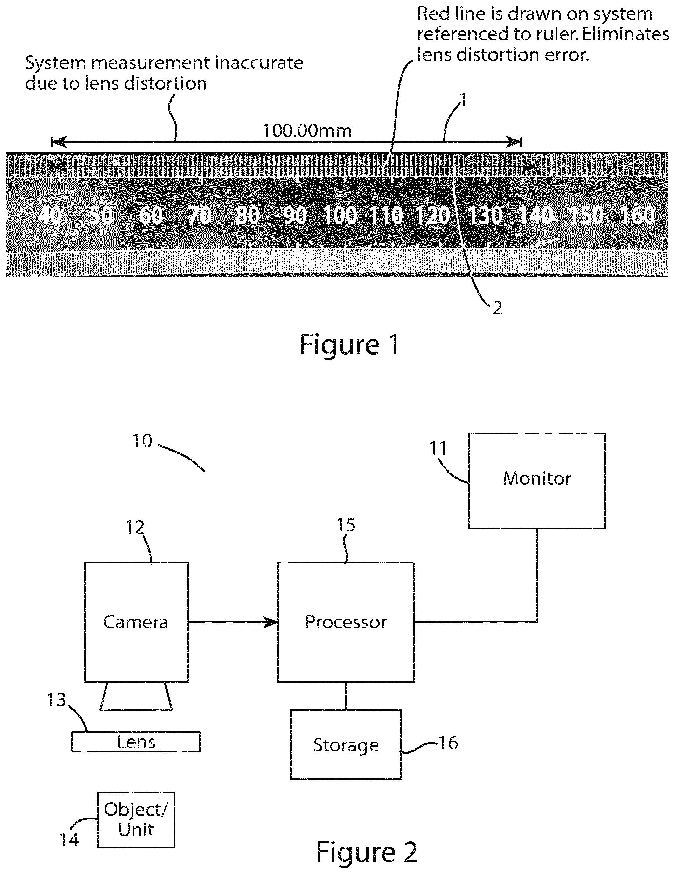

Another solution to correct the lens distortion problem is to provide a glass lens with a reticule/graticule etched on its surface. However fixed gratilcules on lenses cannot be changed. A new lens is required for each new graticule. A profiler requires and XY stage to move to pre-programmed positions or manually change the XY position. Figure 1 above shows in yellow an inaccurate measurement of 100mm caused by lens distortion and calibration errors. This yellow line also represents inaccuracies in graticules generated externally, based on a pixel/mm ration.

It is therefore an object of the invention to provide an improved digital microscope imaging system and method to overcome at least one of the above mentioned problems.

### Summary

According to the present invention there is provided, as set out in the appended claims, a digital imaging system comprising a camera, a lens and a screen to view an object characterised in that the system comprises a module to generate a digital gratilcule on said screen to verify if the object is within or outside a dimensional tolerance.

By generating the graticule on system, at the end of post optical and sensor path, the image already includes optical and sensor distortion. The invention enables the user to 'draw' around a desired sample precision of such a test to produce a high resolution graticule that is used to test the physical dimensions of an object under test (it is +/- pixel, due to sensor resolution). In other words the user can draw the graticule around a desired unit under test and provide compensation for any optical errors or lens distortion errors.

The technical problem solved by the invention is to generate accurate and modifiable digital gratilcules for the purpose of measurement, verification and validation in a Quality Assurance process. The digital imaging system provides a number of advantages over current imaging systems:
1. A graticule is created on the system referencing a known good measurement therefore eliminating lens distortion, calibration and camera zoom errors.
2. Dynamic graticule can be adjusted at runtime.
3. Unlimited number of stored graticules.

The invention solves a number of problems solved by the invention include Lens distortion errors; Calibration Errors; Camera zoom and focus errors.

In one embodiment the system is configured to store system settings and compensate for it. For example next time temperature will be different then system will automatically adjust position/ size of graticule. It will be appreciated that when a graticule is created camera settings, lighting settings, external lighting, up lighting, down lighting etc. are stored,

In one embodiment the said digital graticule comprises a digitally generated overlay.

In one embodiment a plurality of digital graticules can be stored for future graticule generation.

In one embodiment the digital graticule can be modified and stored as an overlay image file with associated metadata.

In one embodiment the metadata comprises at least one of: magnification, focus position, control, settings or other information related to the object.

In one embodiment graticule data can be mixed with video/image data.

In one embodiment individual sections of the graticule can be modified dynamically in real time.

In one embodiment there is provided a module configured to automatically detect if an object is within graticule tolerances and configured to display a pass or fail message wherein the digital graticule is used as a base for automatic inspection of said object.

In one embodiment the digital graticule can be dynamically modified.

In one embodiment the graticule can be dynamically modified based on temperature, zoom position or position of the object.

In one embodiment the system is configured to dynamically track a change in the object position and change the graticule position accordingly to match when the object is moved.

In one embodiment the object comprises a live video image or static image.

In one embodiment the graticule is stored as one or more vectors.

In one embodiment camera settings such as zoom data and focus data associated with the camera are saved in graticule file metadata for said digital graticule.

In one embodiment the camera is configured to correct focus/zoom settings for a generated graticule on said screen.

In another embodiment there is provided a digital imaging system comprising a camera, a lens and a screen to view an object characterised in that the system comprises a module to generate a digital gratilcule on said screen.

In a further embodiment there is provided a method of displaying an image on a digital imaging system comprising a camera, a lens and a screen to view an object characterised in that the method comprises generating a digital graticule on said screen to verify if the object is within or outside a dimensional tolerance.

There is also provided a computer program comprising program instructions for causing a computer program to carry out the above method which may be embodied on a record medium, carrier signal or read-only memory. In one embodiment there is provided computer program comprising program instructions for causing a computer to control the method of claim 15.

### Brief Description of the Drawings

The invention will be more clearly understood from the following description of an embodiment thereof, given by way of example only, with reference to the accompanying drawings, in which:-
Figure 1 above shows in yellow an inaccurate measurement of 100mm caused by lens distortion and calibration errors. This yellow line also represents inaccuracies in graticules generated externally, based on a pixel/mm ratio;
Figure 2 illustrates an example architecture of the imaging system and method according to one embodiment of the invention; and
Figures 3 to 7 illustrates a number of examples of the invention in operation wherein graticules can be generated without the problems of lens distortion and calibration errors.

### Detailed Description of the Drawings

Referring now to the Figures, Figure 1 illustrates an inaccurate measurement of 100mm caused by lens distortion and calibration errors in yellow, generally shown by the reference numeral 1. At its simplest the graticule generation can be modified to take account of the lens distortion as shown by the generated 'redline' graticule, shown by the reference numeral 2 to ensure an accurate dimensioned graticule is generated.

Figure 2 illustrates an example architecture of the imaging system and method according to one embodiment of the invention, indicated generally by the reference numeral 10. A monitor 11 displays an image to a user based on a captured image from a camera 12 and lens 13 combination. The image can be an object or unit under test 14 that the system can be configured to inspect. A processor 15 and storage module 16 to process and store data is provided. The imaging system can be hardware embodied as an integrated digital microscope such as a digital microscope sold under the trade name 'Omni' by the applicants of the present invention.

Generation of digital graticules on a digital camera or monitor on a live video or static image of the object/unit can be selected by a user from a database of stored graticules form the storage module 16. Alternatively a user can generate a new graticule for use. The graticules are used to verify if an object is within or outside dimensional tolerances using a digitally generated overlay.

This can be done by visual inspection by a user or software can be set to determine if an object is outside a desired graticule overlay dimension. A visual 'PASS' of 'FAIL' can be displayed on the screen to inform the user that the object meets desired qualitative requirements. Alternatively a module can be configured to automatically detect if an object is within graticule tolerances and configured to display a pass or fail message wherein the digital graticule is used as a base for automatic inspection of said object.

The overlay graticule can be dynamically altered in real-time and dependent on external factors. The graticule can also contain metadata details such as magnification, focus position, control, settings, system illumination, settings temperature, objective lens, XY table position and/or other useful information.

It will be appreciated that system settings can include, but not limited to, at least one or more of the following:
- all camera settings:
   *zoom position
   *focus position
   *iris
   *digital processing settings, etc.
- lighting state and intensity:
   *up light
   *down light
   *ring light
- temperature
- objective lens dioptre
- motorise table position
- controllable accessories

The system settings can be used to factor in the generation and the dynamic altering of the graticule.

In operation the digital imaging system of Figure 2 can operate as follows:
1. Inspected object is viewed by zoom camera accompanied with objective lens, such configuration allows for bigger flexibility in size of objects and distance from system.
2. Processor can mix camera and graphics to display on monitor. Processor block is comprised of two stages:
   a) draw/modify graticule. A Drawing/Measurement package on processor can be used to create a graticule.
   b) overlay the incoming video from camera with the graticule
      Such configuration allows compensation of optical and sensor distortion in the system.
3. Graticules can be saved in storage as vectors or other data format. For example created gracitule is stored in internal non-volatile memory along with system settings. Graticule can be saved as group of vectors, whereas system settings are stored as detailed system table. Such an approach allows for future reuse.
4. Processor can read the storage (Scale the graticule, if required) and mix with camera video and show on display. Processor also sets camera to correct focus/zoom settings for current graticule.
5. Camera settings such as zoom and focus are saved in the graticule file metadata. The monitor can allow to view result image in Full HD video format.

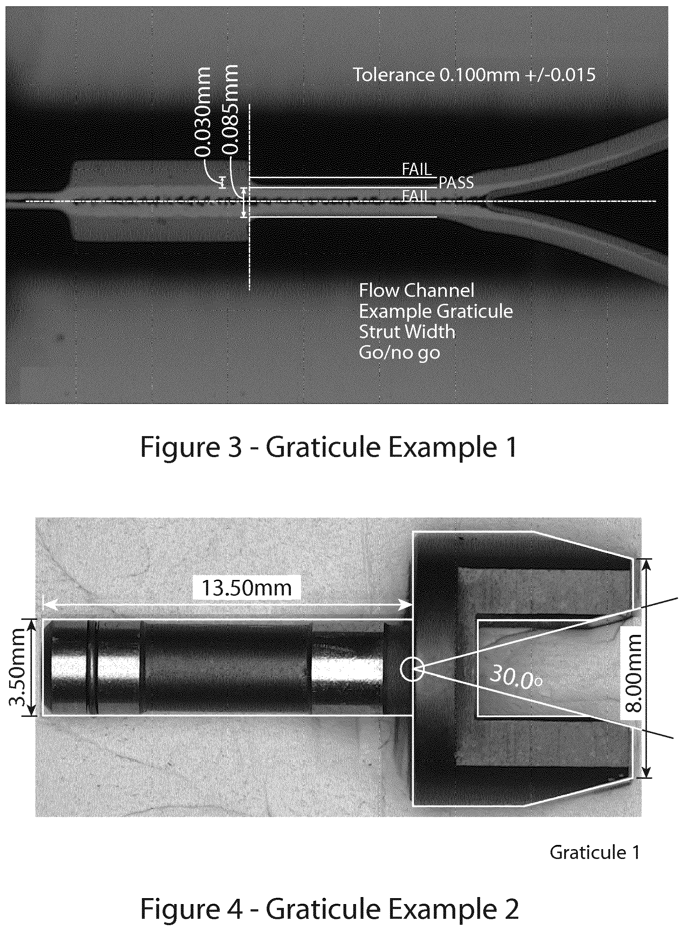

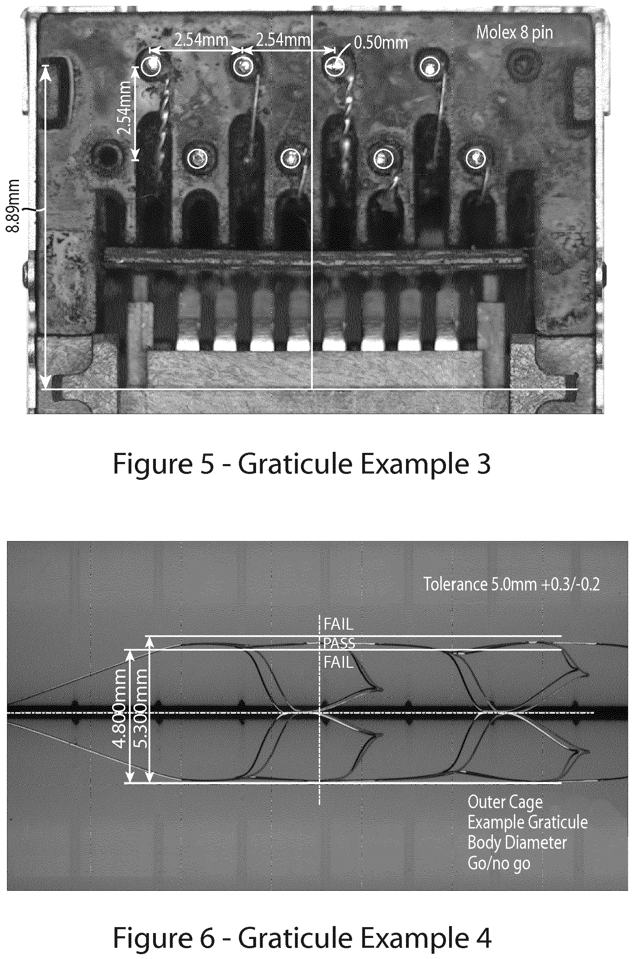

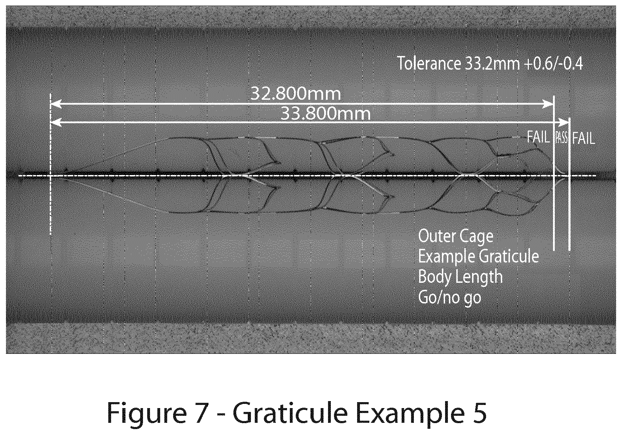

Graticules such as examples 1-5 shown in Figures 3 to 7 can be generated using the same methodology as above. As shown Figure 3 to 7, Examples 1 -5 illustrates 'Go/No go' application graticules where drawn on screen with tolerances used in various applications such as medical device, mechanical device or electronic device field environments.

The embodiments in the invention described with reference to the drawings comprise a computer apparatus and/or processes performed in a computer apparatus. However, the invention also extends to computer programs, particularly computer programs stored on or in a carrier adapted to bring the invention into practice. The program may be in the form of source code, object code, or a code intermediate source and object code, such as in partially compiled form or in any other form suitable for use in the implementation of the method according to the invention. The carrier may comprise a storage medium such as ROM, e.g. CD ROM, or magnetic recording medium, e.g. a memory stick or hard disk. The carrier may be an electrical or optical signal which may be transmitted via an electrical or an optical cable or by radio or other means.

It will be appreciated that in the context of the present invention that the term 'graticule' can be interpreted broadly and to mean 'reticle' as the terms are technically equivalent.

It will be further appreciated that the invention can be applied to testing objects in a range of industries, for example Medical Devices, Electronic Component testing and objects that require testing of Precision Engineering objects.

In the specification the terms "comprise, comprises, comprised and comprising" or any variation thereof and the terms include, includes, included and including" or any variation thereof are considered to be totally interchangeable and they should all be afforded the widest possible interpretation and vice versa.

The invention is not limited to the embodiments hereinbefore described but may be varied in both construction and detail.

## Claims

1. A digital imaging system comprising a camera, a lens and a screen to view an object **characterised in that** the system comprises a module to generate and/or modify a digital graticule in the system on said screen to verify if the object is within or outside a dimensional tolerance.

2. The digital imaging system as claimed in claim 1 comprising a module configured to automatically detect if an object is within graticule tolerances and configured to display a pass or fail message wherein the digital graticule is used as a base for automatic inspection of said object.

3. The digital imaging system as claimed in claim 1 or 2 wherein said digital graticule comprises a digitally generated overlay.

4. The digital imaging system as claimed in any preceding claim wherein a plurality of digital graticules can be stored for future graticule generation.

5. The digital imaging system as claimed in any preceding claim wherein the digital graticule can be dynamically modified.

6. The digital imaging system as claimed in claim 5 wherein the graticule can be dynamically modified based on temperature, zoom position or position of the object.

7. The digital imaging system as claimed in any preceding claim wherein the system is configured to dynamically track a change in the object position and change the graticule position accordingly to match when the object is moved.

8. The digital imaging system as claimed in any preceding claim wherein the digital graticule can be modified and stored as an overlay image file with associated metadata.

9. The digital imaging system as claimed in claim 8 wherein the metadata comprises at least one of: magnification, focus position, control, settings, system illumination, settings temperature, objective lens, XY table position and/or other information related to the object.

10. The digital imaging system as claimed in any preceding claim wherein graticule data can be mixed with video/image data.

11. The digital imaging system as claimed in any preceding claim wherein individual sections of the graticule can be modified dynamically in real time.

12. The digital imaging system as claimed in any preceding claim wherein the object comprises a live video image or static image.

13. The digital imaging system as claimed in any preceding claim wherein the graticule is stored as one or more vectors; and/or
wherein camera settings such as zoom data and focus data associated with the camera are saved in graticule file metadata for said digital graticule; and/or
the camera is configured to correct focus/zoom settings for a generated graticule on said screen.

14. An integrated digital microscope comprising the digital imaging system as claimed in any preceding claim.

15. A method of displaying an image on a digital imaging system comprising a camera, a lens and a screen to view an object **characterised in that** the method comprises generating and/or modifying a digital graticule on said screen to verify if the object is within or outside a dimensional tolerance.
